# EUROPEAN PATENT APPLICATION

(11) **EP 4 750 015 A1**
(43) Date of publication of application: **27.05.2026**
(21) Application number: 24214775.9
(22) Date of filing: 22.11.2024
(51) Int. Cl.: H04L 41/0823, H04L 41/0853, H04L 41/0873

(54) **AN ETHERNET DEVICE**

(71) Applicant: NXP B.V., 5656 AG Eindhoven (NL)
(72) Inventor: Frigerio, Alessandro, 5656 AG Eindhoven (NL); Fu, Yuting, 5656 AG Eindhoven (NL); Roy, Rajeev, 5656 AG Eindhoven (NL)
(74) Representative: Schmütz, Christian Klaus Johannes

(57) **Abstract**

An Ethernet device comprising a transceiver and one or more processors, the Ethernet device configured to: transmit a request message to a staticallyconfigured second Ethernet device on an Ethernet network, wherein the request message is encoded according to a layer-2 protocol and a payload of the request message comprises a request for a second device network configuration from the second Ethernet device; receive a reply message from the second Ethernet device, wherein the reply message is encoded according to the layer-2 protocol and a payload of the reply message includes the second device network configuration of the second Ethernet device; compare the second device network configuration to a local device configuration of the Ethernet device; and route a diagnostic signal based on a mismatch between the second device network configuration and the local device configuration.

## Description

### Field

The present disclosure relates to an Ethernet device and a method for controlling an Ethernet device.

### Summary

According to a first aspect of the present disclosure there is provided an Ethernet device comprising a transceiver and one or more processors, the Ethernet device configured to:
transmit a request message to a statically-configured second Ethernet device on an Ethernet network, wherein the request message is encoded according to a layer-2 protocol and a payload of the request message comprises a request for a second device network configuration from the second Ethernet device;
receive a reply message from the second Ethernet device, wherein the reply message is encoded according to the layer-2 protocol and a payload of the reply message includes the second device network configuration of the second Ethernet device;
compare the second device network configuration to a local device configuration of the Ethernet device; and
route a diagnostic signal based on a mismatch between the second device network configuration and the local device configuration.

In one or more embodiments the Ethernet device may be configured to route the diagnostic signal to one or more of:
a network manager for triggering a network reconfiguration to correct the mismatch; and
a system safety monitor for triggering a safety mechanism.

In one or more embodiments the Ethernet device may comprise a counter. The Ethernet device may be configured to:
transmit the request signal in response to a count signal of the counter meeting a timeout condition.

In one or more embodiments the count signal may be associated with the receipt of packets from the second Ethernet device.

In one or more embodiments the count signal may represent a number of packets received from the second Ethernet device and processed by the Ethernet device according to the local device configuration.

In one or more embodiments the Ethernet device may be configured to:
receive a hello message broadcast by the second Ethernet device, wherein the hello message is encoded according to the layer-2 protocol; and
transmit the request message to the second Ethernet device in response to receiving the hello message.

In one or more embodiments the Ethernet device may be configured to:
broadcast the request message to all network devices connected to each of a plurality of ports of the Ethernet device; and
receive a reply message from each of the connected network devices.

In one or more embodiments the Ethernet device may be configured to identify a mismatch between the local device configuration and the second device network configuration by one or more of:
identifying a mismatch between a network configuration parameter of the local device configuration and a corresponding network configuration parameter of the second device network configuration; and
identify a port of the Ethernet device that is not connected to a remote device and has configuration entries in the local device configuration.

In one or more embodiments the local device configuration of the Ethernet device may comprise one or more of:
one or more configuration tables of the Ethernet device; and
one or more local device registers of the Ethernet device.

In one or more embodiments the one or more configuration tables may comprise one or more layer-2 configuration tables. The one or more local device registers may comprise the one or more counters. The one or more local device registers may be layer 2 device registers.

In one or more embodiments the second device network configuration may comprise one or more of:
one or more second device configuration tables; and
one or second device network parameters.

In one or more embodiments the one or more second device configuration tables may comprise one or more layer-2 second device configuration tables.

In one or more embodiments the local device configuration and the second device network configuration may comprise corresponding network configuration parameters.

In one or more embodiments the corresponding network configuration parameters may comprise: a source port, a destination port, a source MAC address, a destination MAC address and/or a VLAN ID.

In one or more embodiments the corresponding network configuration parameters may relate to one or more of the following high-level network features:
IEEE 802.1CB;
IEEE 802.1Qci;
IEEE 802.1Qbv;
VLAN;
PCP;
Credit-Base Shaper; and
PTP.

In one or more embodiments the corresponding network configuration parameters may relate to IEEE 802.1CB, wherein:
the local device configuration comprises a MAC address of the second Ethernet device, a VLAN ID, an ingress port and/or an egress port, in a layer-2 lookup table; and
the second device network configuration comprises the MAC address of the second Ethernet device, a VLAN ID of the egress stream, a source port and/or a destination port.

In one or more embodiments the corresponding network configuration parameters may relate to IEEE 802.1 Qci, wherein:
the local device configuration comprises an IP source address, an IP destination address, a source port, a destination port, and/or a VLAN ID in a deep packet inspection table; and
the second network configuration comprises the IP source address, the IP destination address, the source port, the destination port, and/or the VLAN ID of the stream from the second Ethernet device.

In one or more embodiments the Ethernet device may be configured to encode the request message according to the layer-2 protocol by:
encoding a message type in the payload of the request message packet; and
encoding one or more network configuration properties in the payload of the request message packet.

In one or more embodiments the Ethernet device may comprise an Ethernet switch.

According to a second aspect of the present disclosure there is provided an Ethernet network comprising any Ethernet device disclosed herein.

According to a third aspect of the present disclosure there is provided a computer-implemented method for controlling an Ethernet device and diagnosing network configuration errors, the method comprising:
causing transmission of a request message from the Ethernet device to a statically-configured second Ethernet device on an Ethernet network, wherein the request message is encoded according to a layer-2 protocol and a payload of the request message comprises a request for a second device network configuration from the second Ethernet device;
obtaining a reply message received by the Ethernet device from the second Ethernet device, wherein the reply message is encoded according to the layer-2 protocol and a payload of the reply message includes the second device network configuration of the second Ethernet device;
comparing the second device network configuration to a local device configuration of the Ethernet device; and
routing a diagnostic signal based on a mismatch between the second device network configuration and the local device configuration.

According to a fourth aspect of the present disclosure there is provided an Ethernet device, comprising one or more processors and a memory comprising instructions that when executed by the one or more processors, cause the one or more processors to carry out any method disclosed herein.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 illustrates an automotive Ethernet network comprising a plurality of Ethernet devices according to an embodiment of the present disclosure;
Figure 2 illustrates a runtime network configuration checking scenario according to an embodiment of the present disclosure;
Figure 3 illustrates an Ethernet device according to an embodiment of the present disclosure; and
Figure 4 illustrates a method for controlling an Ethernet device and diagnosing a network configuration error according to an embodiment of the present disclosure.

### Detailed Description

Network configuration properties of automotive electronic components (also referred to herein as end-nodes or end-devices) are often statically pre-configured before they deployed in a complex automotive Ethernet network. Example end-nodes may include: electronic control units (ECUs) that control various vehicle function (engine control, braking etc); infotainment systems; diagnostic tools; body control modules (lighting, climate control etc) etc.

While the network configuration of each individual network device (each node) can be validated by the configuration tools in the design/configuration phase, part of the configuration involves expected properties of remote/other devices on the network. Such configuration may not correspond to the properties of the target devices on the network and such mismatch usually can only be identified at runtime when both participants are online. If there is a mismatch between the network configuration tables and the network properties of the physical devices / end-nodes, configured actions will not be triggered as desired. Identifying such mismatches can be difficult.

For example, a destination MAC address may not exist in the network, or the local ingress filtering and policing configuration (802.1Qci) may be conflicting with the target network stream. For example, the L2 lookup table of an Ethernet switch may trigger an action based on a combination of configurations including *source port, VLAN ID,* and *Destination MAC address* of the incoming frame. If a different port is connected, the configured destination MAC address does not match or the VLAN ID does not match with the physical network, the configured action will not be triggered, and typically no error message will be generated. The user must then investigate why the configuration is not taking effect by manually inspecting hardware counters or performing a detailed analysis of the communication messages and comparing them with the configuration tables. Many network configuration property mismatches/mistakes are very hard to notice in configuration time. It takes extra effort to debug when things don't work as expected and is frustrating to both developers and end users.

Collecting the configuration properties of the other network devices conventionally happens implicitly during the communication, and existing protocols that collect only IP/MAC addresses create a lot of network traffic. For example, an ARP (address resolution protocol) scan sends 255 messages in the network with destination IP addresses ranging from x.x.x.1 to x.x.x.255 until it gets a reply. The reply indicates that a device with that IP/MAC address exists.

The present disclosure provides methods and apparatus for performing a runtime comparison between the network configuration of a device and the properties of the rest of the network to identify mismatches between the configuration of the host device and the connected devices as early as possible.

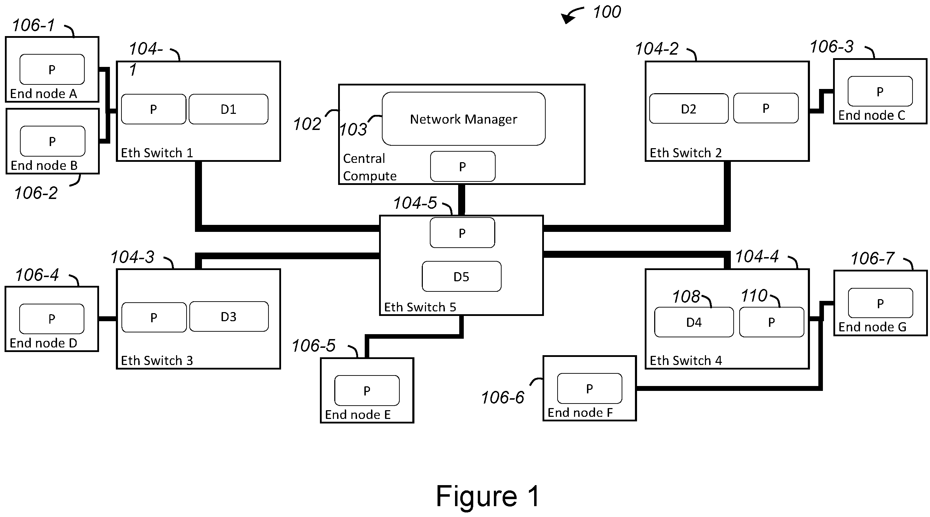

Figure 1 illustrates an automotive Ethernet network 100 comprising Ethernet devices according to an embodiment of the present disclosure.

The automotive Ethernet network 100 (which may be referred to as the network 100) includes a plurality of Ethernet devices (which may be referred to as nodes). The plurality of Ethernet devices include: a central compute device 102 comprising a network manager 103; a plurality of Ethernet switches 104-1, 104-2, 104-3, 104-4, 104-5 (which may be referred to as plurality of Ethernet switches 104); and a plurality of statically pre-configured end-nodes 106-1, 106-2, 106-3, 106-4, 106-5, 106-7 (which may be referred to as plurality of end-nodes 106). The network manager 103 is a centralized application that can monitor and reconfigure the Ethernet devices.

In this example, each end-node 106 is directly connected to one Ethernet switch 104. Each Ethernet switch 104 is connected to the central compute device 102 either directly or indirectly via another Ethernet switch 104. Each Ethernet switch 104 directly connects to one or more remote Ethernet devices (or second Ethernet devices) which may be another Ethernet switch 104 or an end-node 106.

The Ethernet switches 104 can be arranged in a zonal architecture. In this example, each Ethernet switch 104 is an example of an Ethernet device according to an embodiment of the present disclosure. Each Ethernet device includes a transceiver, one or more processors and a memory comprising [software] instructions which may be executed by the one or more processors. In this example, each Ethernet switch 104 comprises a plurality of software modules including: a diagnostic module 108 (labelled D1...D5); and a protocol enablement module 110 (labelled P). In this example, all Ethernet devices 102, 104, 106 of the network 100 include a protocol enablement module, P, which can communicate with the other devices in the network according to a layer-2 protocol. The layer-2 protocol may comprise a layer-2 protocol extension for enabling runtime network configuration checking as disclosed herein.

Using the example of the fourth Ethernet switch 104-4 as a first Ethernet device (also referred to as a local Ethernet device) and the seventh end-node 106-7 as a second Ethernet device on the same network 100 as the first Ethernet device, the diagnostic module 108 of the first Ethernet device 104-4 is configured to transmit a request message to a statically configured second Ethernet device 106-7 on the network 100. The protocol enablement module 110 of the first Ethernet device can encode the request message according to a layer-2 protocol. A payload of the request message includes a request for a second device network configuration of the end-node 106-7.

As disclosed herein, a Ethernet device or a software module (diagnostic module, collector, checker, logger or replier) being described as "configured to transmit" or "configured to receive" a message can be understood to mean that the device or software module is configured to cause a transceiver of the respective device to transmit or receive the message. For example, a diagnostic module configured to transmit a request message can be understood as a diagnostic module configured to cause a transceiver of the respective Ethernet device to transmit a request message.

The operation of the second Ethernet device (end-node) 106-7 is discussed further below. However, in brief, the end-node 106-7 may receive the request message from the first Ethernet device 104-4 and transmit a reply message in response. The reply message can comprise the (requested) second device network configuration. A protocol enablement module, P, of the second Ethernet device 106-7 may encode the reply message according to the layer 2 protocol. The second device network configuration may comprise device configuration tables and/or network properties as defined at the second Ethernet device 106-7.

The diagnostic module 108 receives the reply message from the second Ethernet device 106-7. The diagnostic module 108 can compare the second device network configuration (of the end-node 106-7) from the reply message to a local device configuration of the first Ethernet device 104-4. The local device configuration of the first Ethernet device 104-4 may comprise one or more configuration tables and/or one or more local device registers. The diagnostic module 108 can identify any mismatch between the second device network configuration and the local device configuration and output a diagnostic signal identifying the mismatch. For example, for a software defined network, the diagnostic module 108 may output the diagnostic signal to the network manager 103 of the central compute device 102 and the network manager 103 may trigger a network reconfiguration to correct the mismatch. In some examples, the diagnostic module 108 may output the diagnostic signal to a system safety monitor (not shown), which may be local to the first or second Ethernet device or elsewhere in the network 100, to trigger a safety mechanism.

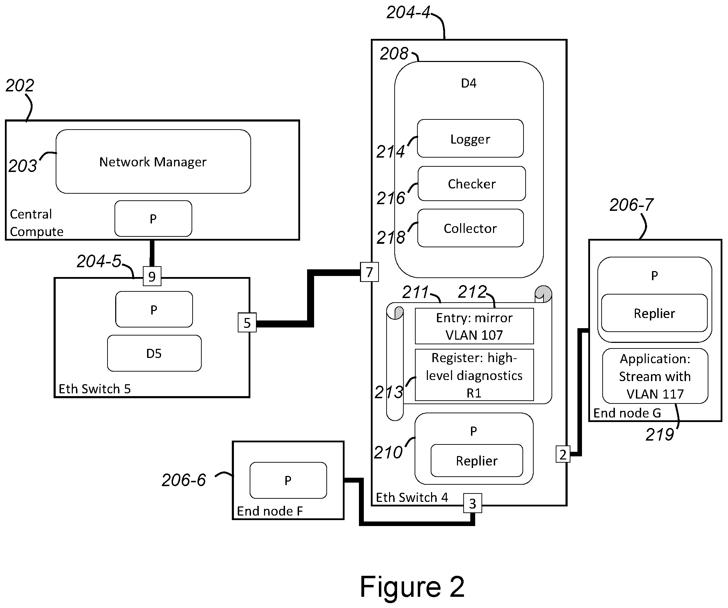

Figure 2 illustrates a runtime network configuration checking scenario according to an embodiment of the present disclosure. Features of Figure 2 that are also present in Figure 1 have been given corresponding reference numbers in the 200 series and are not necessarily described again here.

In this example, the fourth Ethernet switch 204-4 is again used as an example of a first Ethernet device. The fourth Ethernet switch 204-4 has been configured with a local device configuration 211. The local device configuration 211 includes a VLAN lookup table 212. The VLAN lookup table 212 includes instructions for the fourth Ethernet switch 204-4 to mirror network traffic with a VLAN ID = 107 incoming on port 2, to port 3 and port 7. The ports are identified in the figure by the square numbered boxes on the perimeters of the Ethernet switches 204-4, 204-5. The local device configuration 211 also includes a local device register 213 - *the high-level diagnostics R1* - that comprises one or more counters (not shown). The one or more counters can include a specific counter that represents the number of times a packet has been mirrored according to the specific instruction in the VLAN lookup table 212 described above.

The seventh end-node 206-7 has a node network configuration 219 (which is an example of a second device network configuration). In this example, the node network configuration 219 indicates that the seventh end-node 206-7 has been configured with an application stream having an incorrect VLAN ID = 117. The error may arise from a simple typographical error from a user setting up the end-node 206-7.

For a conventional system, the mismatch of the VLAN ID in the VLAN lookup table 212 of the Ethernet switch 204-4 and the node network configuration 219 of the seventh end-node 206-7 will result in the fourth Ethernet switch 204-4 not taking any action with incoming traffic from the seventh end-node 206-7. However, no error message will be generated and a user may have to unpick a lot of configuration settings to identify the cause of the lack of actions on traffic communicated between the fourth Ethernet switch 204-4 and the seventh node 206-7.

In this example, the diagnostic module 208 comprises a plurality of sub-components including a logger 214, a checker 216 and a collector 218. Further details of these sub-components are described below.

The checker 216 can monitor the specific counter related to the configured table entry of the VLAN lookup table 212 defining the mirroring of port 2 to ports 3 and 7. If the counter value is zero after a timeout threshold, the diagnostic module 208 may initiate transmission of the request message. In this way, the first Ethernet device 204-4 is configured to initiate transmission of the request message in response to a count signal of a counter meeting a timeout condition. The count signal may be associated with the receipt of packets from the second Ethernet device (end-node) 206-7. The count signal may represent a count of packets received from the end-node 206-7 and processed by the Ethernet switch 204-4, according to the local device configuration 211.

In response to the timeout condition, the collector 218 encodes a request message according to the layer-2 protocol using the protocol enablement module 210, and transmits the request message to the seventh end-node 206-7. In some examples, the collector 218 may transmit the request message to all directly connected Ethernet devices including the fifth Ethernet switch 204-5, and the sixth and seventh end-nodes 206-6, 206-7. Each requested second Ethernet device 204-5, 206-7, 207-7 receives the request message and generates and transmits a reply message back to the fourth Ethernet switch 204-4. The reply message includes the node network configuration 219 (second device network configuration) of the respective Ethernet device 204-5, 204-6, 204-7 and may be encoded using their respective protocol enablement module, *P*. In this example, the node network configuration 219 may include the node MAC address of the end-node 206-7, egress stream VLAN ID, and source and destination port numbers (e.g. TCP/UDP). Further examples of parameters included in the node/second device network configuration 219 are discussed below.

The collector 218 receives a reply message from each connected node 204-5, 204-6, 204-7. The checker 216 compares the node network configuration 219 of each reply message to respective data in the local device configuration 211. In this example, the checker 216 identifies the mismatch between the VLAN ID in the VLAN lookup table 212 (VLAN=107) and the VLAN ID from the node network configuration 219 from the seventh end-node 206-7 (VLAN = 117).

The checker 216 can relay the mismatch to the logger 214 which may communicate the mismatch to the network manager 203. The network manager 203 may trigger a network reconfiguration, for example instruct the seventh end-node 206-7 to correct its VLAN ID to 107 or, alternatively, trigger the reconfiguration of the VLAN lookup table 212 in the fourth Ethernet switch 204-4 to refer to VLAN ID = 117.

In distributed networks, a mismatch between an end-node 206-7 and its corresponding Ethernet switch (or zone controller) 204-4 could result in additional warnings coming from consecutive diagnostics modules 208 in other Ethernet switches 204-5. For example, the checker in the fifth Ethernet switch 205-5 can find counters that are not incrementing due to traffic not appearing between the fourth Ethernet switch 204-4 and the fifth Ethernet switch 204-5. However, the network configurations of these two switches are not necessarily incompatible. In this case, the message from the logger of the fifth Ethernet switch 204-5 may only inform the network manager 203 that no expected traffic is present between the two Ethernet switches 204-4, 204-5. The network manager 203 may identify that the VLAN ID mismatch between the fourth Ethernet switch 204-4 and the seventh end-node 206-7 is the cause of the lack of traffic between the fourth and fifth switches 204-4, 204-5.

In further detail, methods and apparatus for runtime network configuration monitoring and diagnosis can include four key components:
1. A software implementation and an optional hardware implementation to help monitor the status of an Ethernet device at runtime;
2. A system-level solution to identify and notify mismatching configurations on a complex network with multiple devices;
3. An Ethernet protocol extension to collect the second device network configuration from second Ethernet devices connected on the network and generate network diagnosis messages; and
4. A set of combined network configuration parameters to be monitored and diagnosed at runtime to enhance system-level networking safety and ease of development.

### 1. Software Implementation

As already described above, with reference to Figures 1 and 2, the software solution can include a diagnostic module 208 on each of a sub-set of Ethernet devices (e.g. the Ethernet switches 204) of the network. The diagnostic module 208 can perform checks of the second device network configurations 219 of each connected Ethernet device against the local device configuration 211 of the first/local Ethernet device 204 and communicate possible mismatches to the network manager 203. The diagnostic module 208 can include a device information collector 218, a checker 216 and a logger 214. The software solution can also include a protocol enablement module 210 on all Ethernet devices of the network. The protocol enablement module 210 can include a replier to transmit the second device network configuration 219 of each Ethernet device 206-7 to the collector 218 of the first Ethernet device 204-4.

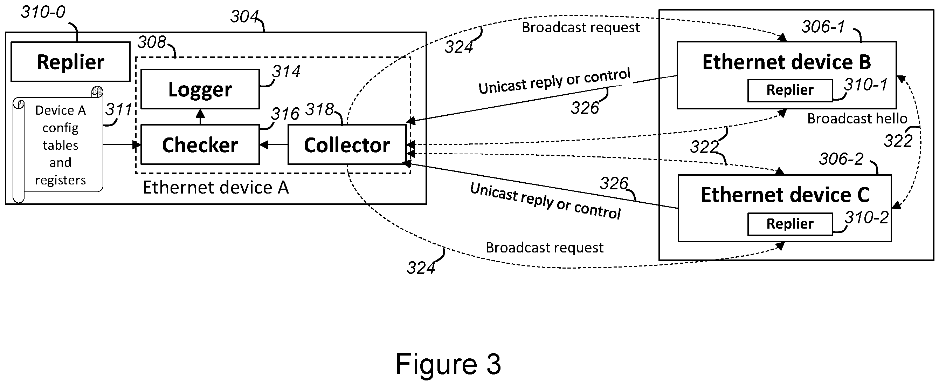

Figure 3 illustrates an example first Ethernet device in the form of an Ethernet switch 304 comprising a diagnostic module 308, and two second Ethernet devices (or a second and third Ethernet device) in the form of end-nodes 306-1, 306-2 comprising protocol enablement modules 310-1, 310-2 according to an embodiment of the present disclosure. The Ethernet devices 304, 306-1, 306-2 are connected on an Ethernet network. Features of Figures 1 or 2 that appear in Figure 3 have been given corresponding numbers in the 300 series and are not necessarily described again here.

As before, the Ethernet switch 304 includes a diagnostic module 308, including a logger 314, a checker 316 and a collector 318. The Ethernet switch 304 also includes a protocol enablement module 310-0 comprising a replier. A first end-node 306-1 includes a protocol enablement module 310-1 comprising a replier. Similarly, a second end-node 306-2 includes a protocol enablement module 310-2 comprising a replier. The first and second end-nodes 306-1, 306-2 do not include a diagnostic module.

In this way, only a sub-set of (but not all) Ethernet devices 304 include the diagnostic module 308. All Ethernet devices 304, 306-1, 306 include a respective protocol enablement module 310-0, 310-1, 310-2 for implementing the Ethernet protocol extension (described below) and replying to the collector 318.

The Ethernet devices 304, 306-1, 306-2 may communicate as follows.

In some examples, upon start-up of the network, all repliers 310-0, 310-1, 310-2 may broadcast a "Hello" message 322 on the network. The "Hello" message 322 may be broadcast once or periodically for a configurable period of time at start-up. In some examples, individual Ethernet devices 310-1, 310-2 may broadcast the "Hello" message 322 when first connected to the network.

The "Hello" message 322 may comprise an Ethernet packet. The Hello message may be identified by a message type encoded in the payload of the packet, according to the layer-2 Ethernet protocol extension by the protocol enablement module 310-0, 310-1, 310-2. In the example Ethernet protocol extension defined below, the "Hello" message 322 is identified by Type=0b00 in the payload.

The collector 318 of the Ethernet switch 304 broadcasts the request message 324. In some examples, the collector 318 may broadcast the request message 324 on all ports of the Ethernet switch 304 to all connected devices / nodes 306-1, 306-2. In some examples, the collector 318 may broadcast the request message 324 to one or more second Ethernet devices 306-1, 306-2 in response to receiving a "Hello" broadcast message 322 from the respective device. In some examples, the collector 318 may broadcast the request message 324 in response to start-up of the network. In some examples, the collector 318 may unicast the request message 324 to a specific second Ethernet device 306-1, 306-2 in response to receiving a count signal meeting a timeout condition, as described above. The count signal may be associated with the receipt of packets at the Ethernet switch 304 from the specific second Ethernet device 306-1, 306-2. In this way, the collector 318 may transmit the request message 324 once, periodically, or on demand, depending on the use case.

The Request message 324 may comprise an Ethernet packet. The request message may be identified by a message type encoded in the payload of the packet, according to the layer-2 Ethernet protocol extension by the protocol enablement module 310-0. In the example Ethernet protocol extension defined below, the "Request" message 324 is identified by Type=0b01 in the payload.

Each second Ethernet device / node 306-1, 306-2 connected to the Ethernet switch 304 includes a replier module 310-1, 310-2. The replier module 310-1, 310-2 receives the request message 324 and sends a reply message 326 back to the collector 318 of the Ethernet switch 304. The reply message 326 comprises an Ethernet packet with a payload including the node network configuration of the node 306-1, 306-2 in the payload.

The Reply message 326 may be identified by a message type encoded in the payload of the message, according to the layer-2 Ethernet protocol extension by the protocol enablement module 310-1, 310-2. In the example Ethernet protocol extension defined below, the "Reply" message 326 is identified by Type=0b10 in the payload.

The collector 318 of the Ethernet switch 304 may collect data from reply messages 326 received from the end nodes 306-1, 306-2. The collector may pair each reply message with a receiving port of the Ethernet switch 304. The collector 318 may maintain a known device database to monitor Ethernet devices connected to the Ethernet switch 304 and on which port. The collector 318 may update the known device database based on the received reply messages 326 and/or received hello messages 322.

The collector 318 may update the known device database via different modes:
1. (active ping): The collector 318 can broadcast a Request message 324 on the network on demand or periodically. A new request message 324 on the network can be a unicast or a multicast message since the addresses are known after receiving the initial reply message upon startup. The active ping approach can reduce network traffic by avoiding unnecessary broadcast messages.
2. (passive alive): The repliers 310-1, 310-2 on connected Ethernet devices 306-1, 306-2 periodically send reply messages 326 to the collector 316 on the Ethernet switch 304 without receiving a request.
3. The collector 318 can initiate a timer for each transmitted request message 324. If no reply message 326 from a known second Ethernet device 306-1, 306-2 is received within a timeout threshold, the collector 318 may delete the known second Ethernet device 306-1, 306-2 from the known device database.

In some examples, the end-nodes 306-1, 306-2 can transmit control messages for changing the operating mode of Ethernet devices / nodes. The control message may be identified by a message type encoded in the payload of the message, according to the layer-2 Ethernet protocol extension by the protocol enablement module 310-1, 310-2. In the example Ethernet protocol extension defined below, the "Control" message is identified by Type=0b11 in the payload.

In some examples, the collector 318 may switch between operational modes in response to receiving a control message from an end-node node 310-1, 310-2. For example, the control message may signal the collector 318 to switch between active ping mode and passive align mode at runtime. The collector 318 mode may also be switched at runtime locally on the Ethernet switch 304.

Returning to the receipt of a reply message 324, the collector 318 may forward the second device network configuration from the reply message to the checker 316. The checker 316 can access all information collected by the collector 318 and the local device configuration 311 (local configuration tables and local device registers). The checker 316 can perform a diagnosis process to compare and analyse the second device network configuration of the connected second Ethernet devices 306-1, 306-2 against the local device configuration 311. Possible outcomes of this diagnosis process include:
1. A configured network parameter (also referred to herein as network configuration parameter) (MAC address, IP address, VLAN, or port, etc) or an expected combination thereof, from the local device configuration 311 does not exist in or conflicts with the second device network configuration from the remote device / node 306-1, 306-2 collected by the collector 318. The diagnosis process can check one or more configured network parameter combinations as mentioned below in table 2;
2. No second Ethernet devices are connected to a port which has configuration entries in one or more local configuration tables;
3. A coherency check on ingress and egress properties identifies an inconsistency, e.g., non-synchronized TAS (Time-Aware Shaper) schedules, not matching egress and ingress policies.

The logger 314 can log the results of the diagnosis process performed by the checker 316. The logger 314 may log the diagnosis results in a log file using common format such as plain text file, CSV, JSON, etc. This diagnosis file can be easily accessed on the host machine (Ethernet switch 304) of the logger 314. The Ethernet switch 304 may send the log file to any other participants on the network via various means for further processing. For example:
- For software defined networks, such as software defined vehicle (SDV): the Ethernet switch 304 may send the diagnosis results to the network manager. The network manager may trigger network reconfiguration at runtime.
- Safety use case: a system safety monitor of the Ethernet switch 304, or a central compute device, may process the diagnosis results to trigger any necessary safety mechanisms.

### 2. Hardware enhancements to support the diagnostics module

As mentioned above, hardware counters on the first Ethernet device 304 can be used to monitor the runtime network device properties and the network stream status. The combination of monitoring data can be used by the disclosed framework to further diagnose the vehicle-level network status and generate warnings if needed. To avoid increasing complexity and silicon cost of the hardware, the counters may comprise configurable counters or unused counters on the hardware for runtime network traffic status and properties monitoring and system level diagnostics.
- Configurable HW counters sets - Multiple sets of counters can be assigned to different parts of a configuration table of the first Ethernet device 304. The configuration of these counters allows monitoring of different configuration parameters based on the use case.
- Use unused bits in existing entries - To limit the growth in the memory footprint / costs, unused bits of configuration entries in the configuration tables of the local device configuration 311 can be used to store the counter values. E.g., a MAC Configuration table entry in an Ethernet switch may have 10 unused bits, a DPI (deep packet inspection) table entry may have 24 unused bits.

The two proposed implementations can enable monitoring / relevant counters for all configuration parameters in the full configuration tables of the local device configuration 311 with minimal increases in the memory footprint. These two proposed implementations are not mutually exclusive and may be combined.

As an example, the entries of the Layer-2 configuration tables are stored in TCAM (fast-accessible memory for searching and matching stored values with a key/mask). The Ethernet switch may comprise an additional counter or reuse an existing hardware counter next to each TCAM entry (or generic configuration entry), increasing each time an entry "fires". In many devices, these counters already exist, at least partially. When reading these counters, a value different from zero corresponds to the activation of the corresponding rule / entry in the local device configuration table. The Ethernet device can monitor a count from one or more of these counters to identify if the traffic flowing through the devices matches with the configured properties.

### 3. Ethernet Protocol Extension

An extension to layer-2 Ethernet protocol can enable automation of the collection of second device network configurations and the diagnosis process described above. Table 1 depicts an example Ethernet protocol extension according to an embodiment of the present disclosure. The protocol extension can enable any combination of network configuration parameters described herein to be embedded in the payload or more specific parts of the proposed frame structure.

**Table 1: Example Protocol Extension**

| **Preamble** | **Start of frame delimiter** | **MAC destination** | **MAC source** | **VLAN tag [optional]** | **Ethertype** | **Payload** | **CRC** | **Interframe gap** |
|---|---|---|---|---|---|---|---|---|
| 7B | 1B | 6B | 6B | 4B | 2B | 46-1500B | 4B | 12B |
| | | Broadcast or destination device MAC | device source MAC | | 0x2024 | • Type + Host device information, or • Type + Warnings | | |

General format of the example protocol extension:
- The example protocol is identified by the Ethertype 0x2024 (an available Ethertype that has not been standardized according to the Ethertype list (https://www.iana.org/assignments/ieee-802-numbers/ieee-802-numbers.xhtml))
- The MAC destination has a specific destination MAC address or broadcast depending on the operation mode
- The payload contains the message type in the first two bits, the rest of the payload always contains the host device (device sending the message) information
- Four different message types are available:
   ∘ 0b00: Hello - sent by an Ethernet device node to inform other Ethernet devices on the network that this Ethernet device has joined the network. The Hello message is broadcast on the network;
   ∘ 0b01: Request - sent by a diagnostic module of an Ethernet device to request device information from another (remote/connected/second) Ethernet device on the network. The Request message may be broadcast on the network;
   ∘ 0b10: Reply - sent by an Ethernet device in response to a received request message. As a default, the Reply message can be unicast to the Ethernet device that sent the request message. In some examples, the reply message can be configured for broadcast on the network;
   ∘ 0b11: Control - sent by an Ethernet device to request a change to the operating mode of Ethernet devices.
- The messages of any message type can be sent on the network once, periodically, or on demand.

The following network configuration parameters may be transmitted in the payload of all message types. The payload may include the following network configuration parameters from the host device (Ethernet device sending the message):
1. Generic network properties (per interface)
   ▪ Host device MAC address
   ▪ Host device IP address
   ▪ TCP/UDP source and destination port number
   ▪ Stream(s) source and destination IP addresses
   ▪ Configured VLANs and priorities
   ▪ Configured traffic shaping mechanisms, if any, such as Credit-Based Shaping (CBS), Time-Aware Shaping (TAS), Priority, etc.
2. (If the host device is an Ethernet switch) Ethernet switch properties
   ▪ Configured MAC addresses in the L2 tables (if existing)
   ▪ Configured VLANs in the L2 tables (if existing)
   ▪ Configured target MAC addresses in the L2 tables (if existing)
   ▪ Configured 802.1CB, ingress and egress PCP remapping table, VLAN Lookup tables, etc.
   ▪ Configured traffic shaping mechanisms (e.g. 802.1Qbv)
   ▪ Ingress filtering and policing configuration (e.g. 802.1Qci)

### 4. Combined network configuration properties

As described above, the diagnostic module of a first Ethernet device (such as an Ethernet switch 304) can compare the second device network configuration from a remote node / second Ethernet device 306-1, 306-2 with a local device configuration of the first Ethernet device 304. The second device network configuration and the local device configuration may include a plurality of network configuration parameters.

The plurality of network configuration parameters may depend on the use case of the network or individual Ethernet devices of the network. The plurality of network configuration parameters may be grouped into standard high-level network features, as laid out in Table 2.

Table 2 below lists example combinations of network configuration parameters or networking properties that should match on both the first Ethernet device that contains the diagnostics module (e.g., managed Ethernet switch) and the connected remote / second Ethernet devices / end-nodes. The network configuration parameters are grouped according to high-level network feature. The listed properties are collected from the Ethernet switch characteristics or are generally available at application level. The example combinations can enable diagnosis at runtime to monitor vehicle-level networking functionality, safety and to accelerate network development.

| **High level network feature** | Configured Network Parameter of Local networking device (Ingress) (First Ethernet Device with diagnostic module) (defined in local device configuration) | | Configured Network Parameter of Remote device (Egress) (Second Ethernet device / end-node) (defined in second device network configuration) | Example problems identified by the checker of diagnostic module |
|---|---|---|---|---|
| **802.1CB** | • **CB configuration tables** including **switch port numbers** for the CB streams | | Device **MAC address** | 1. No CB stream identified due to misconfiguration between L2 Lookup table and remote device MAC address or stream VLAN ID |
| | | | Egress stream **VLAN ID** | |
| | • **Identification of CB stream:** | | Egress **TCP/UDP destination port number** | |
| | | ∘ **L2 Lookup table** including expected incoming | | |
| | | 802.1CB stream properties: **MAC address, VLAN ID, CB Ingress port number, CB destination port number** | | 2. No CB stream identified due to misconfiguration between the DPI entries Key and Mask combination and the stream properties |
| | | ∘ **VLAN Lookup table** per switch port | | |
| | | ∘ or **DPI configuration table** | | |
| | • **Hardware Counters** of identified 802.1CB frames (split / merge counters) | | | |
| **802.1Qci** | • **Qci Flow Meter Table** with rate limit | | Egress **UDP/TCP source and destination port number** | 1. No Qci stream identified due to misconfiguration between DPI entries Key and Mask and egress stream properties |
| | • **Qci Stream Gate Administrative Table** per port | | | |
| | • **QCI Stream Gate Parameters Table** per port | | | |
| | • **DPI tables** including filter on incoming traffic source and destination **IP address, UDP/TCP source and destination port number, VLAN ID,** flag for CB or Qci enablement | | Egress **source and destination IP address VLAN ID** | |
| | • **Traffic Shaping Table per port** with credit shaper configuration | | | |
| | • **Hardware counters** on DPI hits and Qci frames | | | |
| **802.1Qbv (TAS (Time Aware Scheduler))** | **• Qbv configuration table** | | Egress stream **TAS configuration** | 1. Different TAS periods between the two devices |
| | **• Hardware counters** | | | |

**Table 2 - Relevant network configuration parameters**

| | | | | |
|---|---|---|---|---|
| **VLAN** | • **VLAN lookup table** | | Egress **VLAN ID** | 1. No traffic with the configured VLAN ID is identified because of a mismatch with the configuration on the remote device |
| | • **Retagging table** | | | |
| **PCP** | **• L2 Forwarding table Queue** which specifies **egress PCP remapping** | | Egress stream **PCP** value **VLAN ID** | 1. No traffic with the configured PCP value is identified because of a misconfiguration between the L2 Forwarding table and the egress stream PCP value on the remote device |
| | **• Ingress PCP remapping** | | | |
| **Credit-** | **• Traffic shaping table** | | Egress stream **CBS configuration VLAN ID UDP/TCP src/dst port number** | 1. Mismatch between consecutive CBS ports stream rates |
| **Base** | **• Hardware counters** | | | |
| **Shaper** | | | | 2. No traffic present on the preconfigured port/queue because no device is connected to that port |
| **PTP** | • **PTP Configs table** | | Device **PTP configuration** | 1. No sync message received at the configured timeReceiver port because of a misconfiguration in the remote device |
| | • **DPI tables** | | | |
| | | | | 2. Mismatching syncInterval between timeReceiver and timeTransmitter ports |

Two examples where checking combined network configuration parameters at runtime can help diagnose unexpected network behavior at the vehicle level for an automotive Ethernet network, are as follows:
i. 802.1CB (enhance network safety via redundant links)

The network configuration parameters may comprise network configuration parameters relating to IEEE 802.1CB (Frame Replication and Elimination for Reliability (FRER)).

The diagnostic module 308 may check the network configuration parameters of the local device configuration 311 and the second device network configuration from the remote node 306-1, 306-2. In some examples, the diagnostic module 308 may check:
- The MAC address configured in the local device configuration (e.g. in L2 lookup table)
- The source MAC address in the egress Ethernet frame or the MAC address in the MAC address table learned by the Ethernet switch
- The hardware counter of the expected CB stream per switch port

If the hardware counter for the CB stream on the Ethernet switch 304 does not change after a certain timeout threshold, implying the expected CB frames are not arriving, by cross examining the other properties mentioned above (including in table 2), the diagnostic module can identify the root cause of the issue and notify the network manager. For example, a common mistake would be the MAC address configured in the L2 lookup table of the local device configuration 311 of the Ethernet switch 304 does not match the MAC address of the remote node 306-1, 306-2 which is supposed to send out the CB stream. Such an issue can be hard to debug because the configuration on each individual device is valid and compliant with the basic rules.

### ii. 802.1Qci (enhance network security by stream filtering and policing

The network configuration parameters may comprise network configuration parameters relating to IEEE 802.1Qci (Per-Stream Filtering and Policing (PSFP)).

To make sure the 802.1Qci per stream filtering and policing is applied on the intended stream at runtime, the following properties can be checked at runtime:
- In the local device configuration 311 - Qci flow meter table rate limits and queue priorities
- In the local device configuration 311 - DPI table masks with various network configuration parameters (see table 2) and Qci port number
- In the local device configuration 311 - hardware counter of the expected Qci stream per switch port
- In the second device network configuration - egress Ethernet frame properties, such as IP address (source and destination), UDP/TCP port numbers (source and destination), VLAN ID, first 128B of the Ethernet frame payload to be matched with the DPI entry, etc.

By monitoring and cross comparing these properties (and/or those listed in the relevant row of table 2) the diagnostic module can identify if the Qci is applied on the intended stream, and if not, locate the mismatch in the configuration.

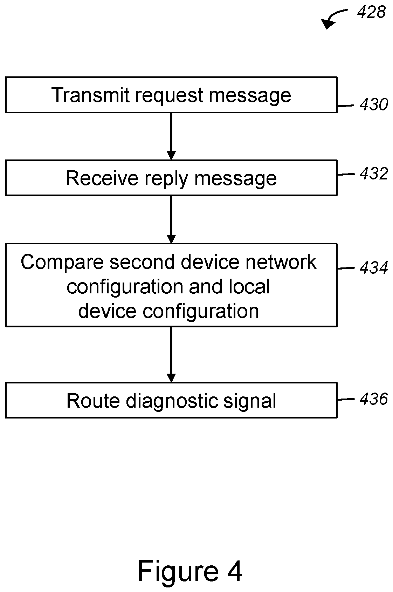

Figure 4 illustrates a method for controlling an Ethernet device and diagnosing a network configuration error according to an embodiment of the present disclosure.

A first step 430 comprises causing transmission of a request message to a statically-configured second Ethernet device on an Ethernet network, wherein the request message is encoded according to a layer-2 protocol and a payload of the request message comprises a request for a second device network configuration from the second Ethernet device.

A second step 432 comprises receiving a reply message from the second Ethernet device, wherein the reply message is encoded according to the layer-2 protocol and a payload of the reply message includes the second device network configuration of the second Ethernet device.

A third step 434 comprises comparing the second device network configuration to a local device configuration of the Ethernet device.

A fourth step 436 comprises routing a diagnostic signal based on a mismatch between the node network configuration and the local device configuration.

Although, the disclosure refers regularly to automotive Ethernet, the disclosure is applicable to any embedded Ethernet system using statically preconfigured nodes/devices.

The disclosed apparatus and methods can advantageously provide a vehicle-level runtime network configuration and status monitoring and diagnosis mechanism with an Ethernet protocol extension to identify such network mismatch and notify the users the potential problems.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. An Ethernet device comprising a transceiver and one or more processors, the Ethernet device configured to:
transmit a request message to a statically-configured second Ethernet device on an Ethernet network, wherein the request message is encoded according to a layer-2 protocol and a payload of the request message comprises a request for a second device network configuration from the second Ethernet device;
receive a reply message from the second Ethernet device, wherein the reply message is encoded according to the layer-2 protocol and a payload of the reply message includes the second device network configuration of the second Ethernet device;
compare the second device network configuration to a local device configuration of the Ethernet device; and
route a diagnostic signal based on a mismatch between the second device network configuration and the local device configuration.

2. The Ethernet device of claim 1, wherein the Ethernet device is configured to route the diagnostic signal to one or more of:
a network manager for triggering a network reconfiguration to correct the mismatch; and
a system safety monitor for triggering a safety mechanism.

3. The Ethernet device of claim 1 or claim 2, wherein the Ethernet device comprises a counter and is configured to:
transmit the request signal in response to a count signal of the counter meeting a timeout condition.

4. The Ethernet device of claim 3, wherein the count signal is associated with the receipt of packets from the second Ethernet device.

5. The Ethernet device of claim 3 or claim 4, wherein the count signal represents a number of packets received from the second Ethernet device and processed by the Ethernet device according to the local device configuration.

6. The Ethernet device of any preceding claim, wherein the Ethernet device is configured to:
receive a hello message broadcast by the second Ethernet device, wherein the hello message is encoded according to the layer-2 protocol; and
transmit the request message to the second Ethernet device in response to receiving the hello message.

7. The Ethernet device of any proceeding claim, wherein the Ethernet device may identify a mismatch between the local device configuration and the second device network configuration by one or more of:
identifying a mismatch between a network configuration parameter of the local device configuration and a corresponding network configuration parameter of the second device network configuration; and
identify a port of the Ethernet device that is not connected to a remote device and has configuration entries in the local device configuration.

8. The Ethernet device of any preceding claim, wherein the local device configuration of the Ethernet device comprises one or more of:
one or more configuration tables of the Ethernet device; and
one or more local device registers of the Ethernet device.

9. The Ethernet device of any preceding claim, wherein the second device network configuration comprises one or more of:
one or more second device configuration tables; and
one or second device network parameters.

10. The Ethernet device of any preceding claim, wherein the local device configuration and the second device network configuration comprise corresponding network configuration parameters.

11. The Ethernet device of claim 10, wherein the corresponding network configuration parameters comprise: a source port, a destination port, a source MAC address, a destination MAC address and/or a VLAN ID.

12. The Ethernet device of claim 10 or claim 11, wherein the corresponding network configuration parameters relate to one or more of the following high-level network features:
IEEE 802.1CB;
IEEE 802.1Qci;
IEEE 802.1Qbv;
VLAN;
PCP;
Credit-Base Shaper; and
PTP.

13. An Ethernet network comprising the Ethernet device of any of claims 1 to 12.

14. A computer-implemented method for controlling an Ethernet device and diagnosing network configuration errors, the method comprising:
causing transmission of a request message from the Ethernet device to a statically-configured second Ethernet device on an Ethernet network, wherein the request message is encoded according to a layer-2 protocol and a payload of the request message comprises a request for a second device network configuration from the second Ethernet device;
obtaining a reply message received by the Ethernet device from the second Ethernet device, wherein the reply message is encoded according to the layer-2 protocol and a payload of the reply message includes the second device network configuration of the second Ethernet device;
comparing the second device network configuration to a local device configuration of the Ethernet device; and
routing a diagnostic signal based on a mismatch between the second device network configuration and the local device configuration.

15. An Ethernet device, comprising one or more processors and a memory comprising instructions that when executed by the one or more processors, cause the one or more processors to carry out the method of claim 14.
